# EUROPEAN PATENT SPECIFICATION

(11) **EP 2 605 452 B1**
(45) Date of publication and mention of the grant of the patent: **26.08.2015**
(21) Application number: 12783007.3
(22) Date of filing: 27.04.2012
(51) Int. Cl.: H04L 12/24, H04L 12/703, H04L 12/721

(54) **METHOD FOR REPAIRING DATA FRAME ROUTES AND NETWORK BRIDGE**
VERFAHREN ZUR REPARATUR VON DATENRAHMENROUTEN UND NETZBRÜCKEN
PROCÉDÉ DE RÉPARATION DE CHEMINS DE TRAMES DE DONNÉES ET PONT DE RÉSEAU

(30) Priority: 10.05.2011 ES 201100516 P
(43) Date of publication of application: 19.06.2013
(73) Proprietor: Universidad De Alcalá, 28801 Alcalá de Henares (Madrid) (ES)
(72) Inventor: IBAÑEZ FERNANDEZ, Guillermo, E-28801 Alcala de Henares (ES); ROJAS SÁNCHEZ, Elisa, E-28801 Alcala de Henares (ES); CARRAL PELAYO, Juan Antonio, E-28801 Alcala de Henares (ES); RIVERA PINTO, Diego, E-28801 Alcala de Henares (ES); ARCO RODRÍGUEZ, José Manuel, E-28801 Alcala de Henares (ES)
(74) Representative: Carvajal y Urquijo, Isabel
(86) International application number: PCT/ES2012/070295
(87) International publication number: WO 2012/152969

(56) References cited:
- EP-A1- 2 242 215
- EP-A2- 1 455 510
- US-A1- 2003 016 624
- US-A1- 2010 039 961
- GUILLERMO IBAÌ Ã+-EZ ET AL: "Fast Path Ethernet Switching: On-demand, efficient transparent bridges for data center and campus networks", LOCAL AND METROPOLITAN AREA NETWORKS (LANMAN), 2010 17TH IEEE WORKSHOP ON, IEEE, PISCATAWAY, NJ, USA, 5 May 2010 (2010-05-05), pages 1-7, XP031706936, ISBN: 978-1-4244-6067-0
- GUILLERMO IBANEZ ET AL.: 'Fast Path Ethernet Switching: On-demand, efficient transparent bridges for data center and campus networks' 2010 17TH IEEE WORKSHOP ON,LOCAL AND METROPOLITAN AREA NETWORKS (LANMAN) 05 May 2010, pages 1 - 7, XP031706936

## Description

### Field of the Invention

The present invention is included within the field of information and communications technologies, particularly in the transmission of information in the communications networks operating within the data link layer.

### Background of the Invention

There are known methods for routing data frames and network bridges which establish minimum routes between end or terminal systems by flooding broadcast frames. To solve the failure or expiry situations of the learned addresses, these routing methods include methods for repairing routes in the case of bridge, link or bridge initialization failure.

These methods have several drawbacks, including an intense and complex processing in the bridges, either by having to create and forward the control packets for repairing routes, or by having to create and forward the deletion packets of learned MAC addresses. In the methods for repairing routes known the unicast frame with unknown destination is encapsulated by adding a header with the multicast destination address of all the bridges configured according to the method. This method is expensive because a special repair packet must be prepared for each data flow to destination, once for each MAC address which has expired since they are associated with the link that has failed.

Likewise, patent US 7, 760, 667 B2 defines a method for forwarding frames that, when it detects a link or node failure, it creates a packet for deleting the learned addresses information, which packet is sent to the neighbouring nodes to perform the deletion of the learned addresses and to forward it in turn to its neighbouring nodes. This method has the problem of the great processing effort that requires at each node the deletion of all the addresses indicated in the respective ports of the bridge: a large number of addresses, associated to different ports of the bridge, should be deleted, and the list of addresses should be forwarded. This processing is similar to that used in the Spanning Tree Protocol for deleting learned addresses, but selectively, so as to not affect the established routes.

Guillermo Ibáñez et al. "Fast Path Ethernet Switching: On-demand, efficient transparent bridges for data center and campus networks", LANMAN, 2010 17th IEEE workshop on, IEEE, Piscataway, NJ, USA, 5 May 2010, pages 1-7, XP031706936, ISBN: 978-1-4244-6067-0 propose a variant of the transparent bridge paradigm to increase infrastructure utilization.

It was therefore desirable a method for repairing routes applied to the network nodes or bridges which reduced the required processing.

### Description of the invention

The invention makes unnecessary to communicate the deletion of addresses by means of deletion messages broadcast from the bridge initiating the repair, performing an on-demand route repair, and said repair can be performed without loosing frames.

The repair on-demand, with return of frames, conditional route change and route proxy has several advantages:
- the repair requests are not simultaneous but they are performed only when using a route, in this way, they are staggered in time distributing the process load, and are performed in a distributed manner, i.e., each source bridge performs the repair of the flows departing from it that need to be repaired,
- the return, without any required modification, of the unicast frames with unknown destination (destination address not associated with any port) at the bridge prevents the additional processing required by the encapsulating of the frames at the bridge with the failure link, distributing the necessary processing between the border bridges of the data flows to be repaired,
- it prevents that after a route repair or after a second learning to a same destination, particularly when the new route is shorter than the previous one, some frames sent subsequently may overtake others sent previously, but that circulate through the old route,
- speeds up the repair and reduces the broadcast packets because any bridge that knows a route, answers directly the bridge requesting the repair, repairing the path when it replies to the requesting bridge.

In the method for repairing routes, a source MAC address is learned by the association thereof in a recording unit and it is associated to the identity of the input port, where said source address-input port association is blocked, i.e. it is not modified during a guard time, not allowing either the creation of new associations of said MAC address to other ports of the same bridge.

The method contemplates forwarding, from each bridge, the received frames with broadcast destination address or broadcast, not only forwarding through the ports enabled by the Spanning Tree Protocol but through all the ports of the bridge, except for the port through which the frame was received at the bridge in the first place.

According to the method, at each bridge receiving a frame, only one entry is entered in the recording unit of the bridge, with the source address of the frame, when there is not previously an entry with the same source address associated to another port and if so, the identity of the input port of the frame and the moment of its arrival are registered. Optionally, a frame identifier can be assigned, for example, as a result of a logical operation with some or all the values of the fields of the received frame, for example, the field of the destination address, for its use in the access to the entry.

At each bridge receiving a frame, all the frames that are received during the guard time at ports other than the one that caused the registration of the same source MAC address in the recording unit, are rejected. Also, similar frames are rejected, those that have matching results when performing a logical operation on the same, such as checking the same source address.

Likewise, the method for repairing routes additionally comprises a process of unlearning or deleting learned routes, by means of frames returned to the source MAC address by the bridge receiving them, without modifying the frame to be returned. The unlearning process intervenes optionally in the reconfiguration of the network to repair the routes damaged by a failure.

In such a way that if a bridge or link does not work, the ports connected to that link delete all the entries (SA addresses) from the recording unit associated with the port. When a unicast frame of a flow reaches any of the bridges and discovers that there is no route (address associated to the destination port) to reach the destination, the repair mechanism is started, therefore the flows that are no longer in use do not require to be repaired.

The unlearning or deletion process by means of the return of the frames with destination address affected by a reconfiguration can be caused by a fall down of a network bridge, a link, or by the expiration of the addresses.

In the event that the network reconfiguration is due to a link failure, the deletion of the learned addresses at the two ports of the link is necessary. When the fall down of the link is detected locally, the bridges of the two ends of the link act deleting all the learned addresses at the port connected to said failure link.

There are several methods for repairing routes with different advantages and disadvantages that vary with the routing method used.

Standard ARP Request and ARP Reply frames or special repair packets (Path Fail, Path Request, and Path Reply) can be used for the repair.

The use of standard ARP packets reduces the processing necessary in the bridges at the expense of increasing the processing in the terminals, which are those that process the ARP packets.

The use of special repair packets allows distinguishing between new routes establishment packets and repairing packets, these require inspection in each bridge if the packets have as destination address the multicast address of all the bridges.

In the present invention, the basic mechanism for repairing routes comprises a new method of frame reverse forwarding. In reverse forwarding when a frame with DA address is received at a bridge and it does not have any port associated with the DA destination address, it is returned through the port that is associated with the SA source address of the frame (the same port through which it was sent to the bridge that returns it), the forwarding logic of the bridge acts inversely, SA acting as DA and DA as SA at the bridge forwarding logic, so that the returned frame is rerouted through the reverse route that it travelled before being returned. The process is repeated at each bridge in the same way whereby the frame returns through the previous route to the border bridge.

Therefore, when a frame arrives at a bridge and it does not know the destination, but the bridge has the port associated to the source address SA, the bridge returns the frame backwards through the stored port that is associated in its recording unit to the source of the frame. For this, the existing forwarding mode is expanded with respect to that of ARP-Path SA, including a mode of return of unknown unicast frames that does not require any modification of the frame whatsoever.

But it occurs that if, in any bridge on the route backwards, there is no port associated with the SA source address, in the case that the arrival route was not symmetrical, according to the method described, the bridge will create a special frame that will be issued through all the ports to reach the border bridge, source of the unknown destination unicast frame.

There are two variants of the repair method with special packets: forward repair method and backward repair method.

In the forward repair method (preferred), a broadcast Path Fail packet directed to the bridge that is connected to the destination terminal is generated, containing the MAC address DA (Destination Address) to be repaired. The destination bridge generates a broadcast Path Request.

In the backward method a broadcast Path Fail packet directed to the bridge that is connected to the source terminal (the one connected to the source terminal SA) that originated the unicast frame is generated, which generates the broadcast Path Request that will block the ports in an analogous way to that of an ARP Request, to start creating the new route and which is answered with unicast Path Reply from the destination.

### Path Proxy Function (Path-proxy)

The path Proxy function allows reducing the time and processing for repairing routes, reducing the broadcast messages.

The path Proxy function comprises that when a bridge receives in one of its ports, a Path Fail or a Path Request packet related with the repair of a MAC address, which is (the receiver bridge) associated and valid, it replies with a unicast Path Reply message towards the source address, the MAC of the repaired destination and towards the destination address that of the bridge that issued the Path Fail. This Path Reply is sent backwards through the port where it was received, which reports backwards that through that port there is a route to the DA MAC destination. This backwards message, when is received at each bridge, is forwarded through the port associated with the MAC address of the bridge that issued the Path Fail or Path Request and activates the DA address at every bridge it goes through, repairing the route towards DA up to the bridge that issued the broadcast Path Fail.

The bridge that issued the Path Fail may receive several Path Reply messages, each from a different bridge of the network, but the first to be received is the one that produces the learning of the MAC address. The others are discarded. To do so, the first Path Reply received is entered in a table of recently repaired addresses, with a duration of the timer similar to that of the guard timer (longer than necessary so that the frames travel back and forth throughout the network).

Therefore, the method for repairing data frame routes comprises:
- receiving, through a network bridge port where said port has an assigned port identity, a frame comprising a source MAC address and a destination MAC address;
- associating, in a recording unit, the source MAC address of the received frame to the port identity of the bridge that received the frame in the first place, with an expiration indicator of the frame and the arrival time of the frame;
- deleting, in the recording unit, the associations that a port of bridge may have when a line failure is detected in said port or when the address validity timer expires;
   in such a way that when the received frame does not have its destination MAC address associated to any port in the recording unit of the bridge and there is a port, in the recording unit of the bridge receiving the frame, which is associated to the source MAC address of the received frame, the method comprises:
- routing the frames whose source MAC address is associated with the port through which they are received, towards the port associated with said source MAC address;
- rejecting the subsequent unicast frames received, whose destination MAC address is listed in a log of addresses being repaired.

In a preferred way, the method comprises setting a guard time that blocks the modification of the source MAC address-input port association and the creation of new associations of said MAC address with other ports of the same bridge.

Preferably, if the guard time has elapsed without having received a repairing frame through the port associated with the source MAC address and the route repairing frame arrives at a port different to the one associated with the source MAC address of the frame, the port therethrough the frame has been received is associated to the source MAC address being repaired.

In a preferred way, the route repairing frames are selected from:
- ARP Request and ARP Reply standard frames;
- special repair packets: Path Fail, Path Request and Path Reply;
- combinations of the above.

In a preferred way, the log of addresses being repaired comprises the destination MAC addresses under repair and a repair timer longer than the time required for the repairing frames to travel through the network. In the log of addresses being repaired, the destination MAC addresses that are being repaired are entered during a time assigned to the repair timer in order to reject, without further processing, the subsequent frames received for the same destination, avoiding sending a repair packet for every unknown unicast packet received.

In a preferred way, the method, when a network bridge receives a Path Fail or Path Request repairing frame comprising a destination MAC address, which is validly associated to one of its ports in its recording unit:
- sending, backwards through the port where it was received, a Path Reply unicast frame towards the source MAC, the destination MAC of the received frame and towards the destination MAC, the source MAC of the received frame;
- associating, each bridge that receives the Path Reply frame, the destination MAC address to the port through which the frame is received;
- sending, each bridge receiving the Path Reply frame, the Path Reply frame received through the port associated with the MAC address the MAC, source of the received frame;
- registering, each bridge that receives the Path Reply frame, the destination MAC address received in a table of recently repaired addresses and activates a guard timer;
- registering, the bridge whose MAC coincides with the destination MAC of the Path Reply frame, the MAC source of the received frame at the port of the bridge through which the frame was received;
- rejecting, the bridge whose MAC coincides with the destination MAC of the Path Reply frame, the subsequent Path-Reply frames whose MAC addresses coincide with their MAC that are received afterwards during the validity of the guard timer.

The network bridge configured to route frames at the data link level and in the user plane in accordance with the routing method of data frames comprises processing means configured for:
- receiving, through a network bridge port where said port has an assigned port identity, a frame comprising a source MAC address and a destination MAC address;
- associating, in a recording unit, the source MAC address of the received frame to the port identity of the bridge that received the frame in the first place, with an expiration indicator of the frame and the arrival time of the frame;
- deleting, in the recording unit, the associations that a port of bridge may have when a line failure is detected in said port or when the address validity timer expires;
   in such a way that when the received frame does not have its destination MAC address associated to any port in the recording unit of the bridge and there is a port, in the recording unit of the bridge receiving the frame, which is associated to the source MAC address of the received frame, the processing means are configured for:
- routing the frames whose source MAC address is associated with the port through which they are received, towards the port associated with said source MAC address;
- rejecting the subsequent unicast frames received whose destination MAC address is listed in log of addresses being repaired.

In a preferred way, the processing means are configured for setting a guard time that blocks the modification of the source MAC address-input port association and the creation of new associations of said MAC address to other ports of the same bridge.

Preferably, if the guard time has elapsed without having received a repairing frame through the port associated with the source MAC address and the route repairing frame arrives through a port different to the one associated with the source MAC address of the frame, the processing means are configured for associating the port through which the frame has been received to the source MAC address being repaired.

In a preferred way, the method, when a network bridge receives a Path Fail or Path Request repairing frame comprising a destination MAC address which is validly associated to one of its ports in its recording unit:

In a preferred way, when a network bridge receives a Path Fail or Path Request repairing frame comprising a destination MAC address which is validly associated to one of its ports in its recording unit, the processing means are configured for:
- sending, backwards through the port where it was received, a Path Reply unicast frame towards the source MAC, the destination MAC of the received frame and towards the destination MAC, the source MAC of the received frame;
- associating, each bridge that receives the Path Reply frame, the destination MAC address to the port through which the frame is received;
- sending, each bridge receiving the Path Reply frame, the Path Reply frame received through the port associated with the MAC address the MAC, source of the received frame;
- registering, each bridge that receives the Path Reply frame, the destination MAC address received in a table of recently repaired addresses and activates a guard timer;
- registering, the bridge whose MAC coincides with the destination MAC of the Path Reply frame, the MAC source of the received frame at the port of the bridge through which the frame was received;
- rejecting, the bridge whose MAC coincides with the destination MAC of the Path Reply frame, the subsequent Path-Reply frames whose MAC addresses coincide with their MAC that are received afterwards during the validity of the guard timer.

Finally, the invention also comprises a switched telecommunications network comprising, at least, one network bridge as the one defined above.

### Brief description of the drawings

Next, a series of drawings will be described very briefly, for better comprehension purposes of the invention and which relate specifically to an embodiment of said invention, which is shown as a non-limiting example thereof.
Figure 1 shows a network topology wherein a route established between terminals A and B is shown.
Figure 2 shows the network topology of Figure 1 wherein a possible blockage of of the network bridges ports is shown.
Figure 3 shows the same network topology wherein terminal A sends an ARP Reply to terminal C to complete the route between C and A.
Figure 4 shows the disorder caused in the network topology.
Figure 5 shows another network topology wherein a link falls in the established route.
Figure 6 shows the exchange of frames for setting an alternative route, applying the method of the present invention.
Figure 7 shows the exchange of frames for setting an alternative route, applying the method of the present invention.
Figure 8 shows another network topology with a fallen down link in the established route.
Figure 9 shows the exchange of frames for setting an alternative route by applying the method of the present invention.
Figure 10 shows another network topology with a fallen down link in the established route.
Figure 11 shows the exchange of frames for setting an alternative route of the two initially formed by applying the method of the present invention.

### Detailed description of an embodiment

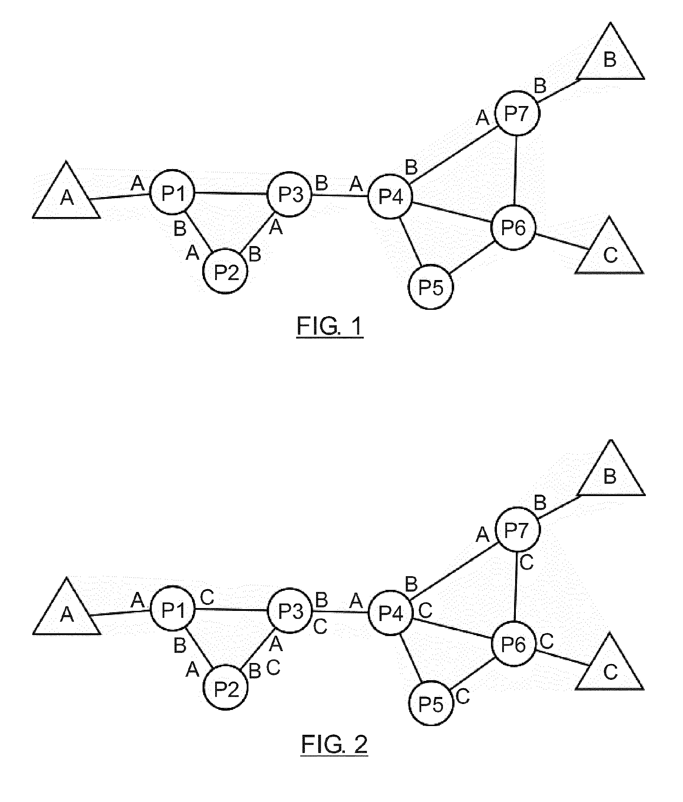

**Figure 1** shows a network topology formed by three terminals A, B and C and seven network bridges P1, P2, P3, P4, P5, P6 and P7, wherein a route between terminal A and terminal B is established. In the links, near the network bridges, the source MAC address associated to the input port of the network bridge can be observed.

If terminal C starts an ARP Request to know terminal A, the ports of the network bridges could be blocked, as shown in **Figure 2****,** wherein the triangle on the left formed by the bridges P1, P2 and P3, under equivalent load balancing conditions, it would be reached sooner through the upper link that connects bridge P1 with bridge P3 than through the lower links between the bridges P1-P2 and P2-P3.

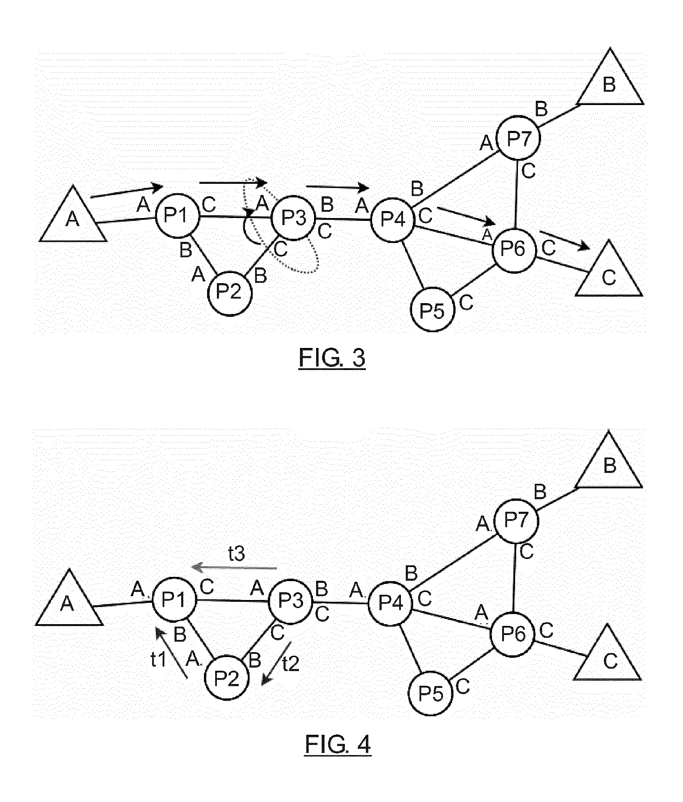

In this scenario, **Figure 3** shows the response of terminal A to terminal C with an ARP Reply. In the bridge P3, the ARP Reply finds that A has already been learned at the lower port, so, following the method known in the art, in that learning state, a new ARP has greater priority than the contents of the routing table, whereby the routing table is modified according to the new information.

In this situation, chances are that in the longest route, the one formed by the bridges P1-P2 and P2-P3, there ware frames with source B and destination A that passed through bridge P3 before the change in the routing table, which had not reached the other end yet. This scenario is represented in **Figure 4** where frames t1 and t2, would arrive after frame t3, sent in last place, thus disorganizing the frames sent.

Likewise, this disorder could occur, for example, at a repair between terminal A and terminal C wherein the original route between terminal A and terminal B through P1-P2 and P2-P3 is deleted, shifting it to network bridges P1-P3.

Applying the present invention to any type of special repair packets either ARP or in broadcast-type messages, to allow the invention to validate the learned alternative route.

The network bridge of the present invention, upon receiving a packet that allows to create alternatives (either ARP or a special one), registers the first alternative route that becomes known, in the event that the first port at which the message arrived was not the port that was registered, corresponding to the old route; in this case the alternatives would not be registered, since the old route is still the chosen one.

This alternative route will be deleted if the same special packet is received through the old route, in which case the old route is still valid, and it will be confirmed if the packet is not received through the old route, in which case the old route is no longer valid.

Thus, the present invention prevents modifying a still valid route, which happens with the current option, with the possible mess of packets that this produced.

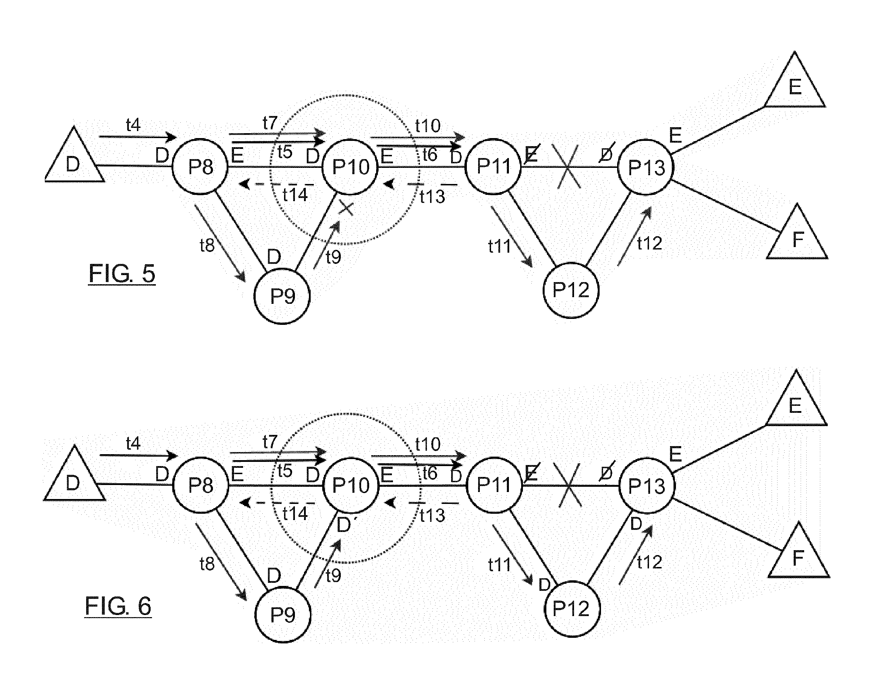

**Figure 5** shows a network topology formed by three terminals D, E and F and six network bridges P8, P9, P10, P11, P12 and P13, wherein a route between terminal E and terminal D is established and the link between the bridge P11 and P 13 has fallen down.

The following frame from terminal D to E, t4, generates the repair, when it is sent backwards, t13, broadcast frame to all the bridges containing the source addresses SA and destination DA of the received frame. When the frame t13 reaches the source border bridge connected directly to terminal D, P8, said bridge sends a Path Request special packet that spreads through all the network, frames t7, t8, t9, t10, t11 and t12.

At the bridge P10, if the path request arrives first through the port that it already has stored for A, i.e. frame t7 arrives before t9, said route is maintained and refreshed. But, if the path request arrives first through the alternative route, i.e., frame t9 arrives before t7, such as shown in **Figure 6****,** the alternative route for D, D' is registered at the bridge P10, without deleting the original route (which may be in use, for example between D and F). Next, a time is allowed for checking if frame t7 also arrives at said bridge, through the original route. Such as shown by the topology of **Figure 6****,** the frame will end up arriving, indicating that said route is active, and it will be maintained, deleting the alternative D'.

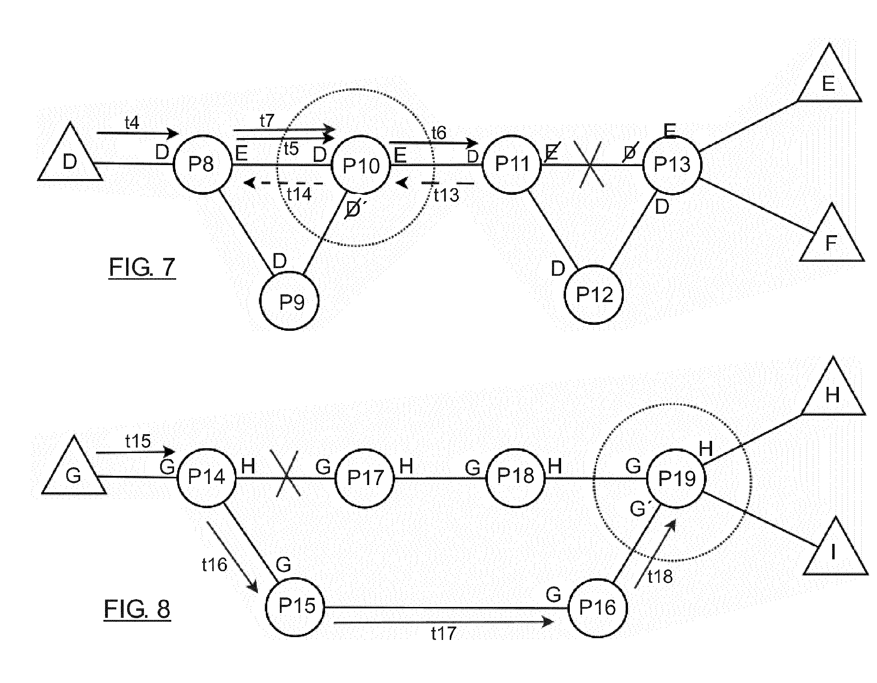

However, this replica of the Path request does not have to arrive always through the original route, such as happens in the topology of **figures 8****,** **9****,** **10** **and** **11****.** These figures show a network topology formed by three terminals G, H e I and six network bridges P14, P15, P16, P17,P18 and P19, where, before the fall down of the link marked with an X (between P14 and P17) a frame t16 is generated that spreads like t17 and t18 and that reaches bridge P19 taking a different route to the original, being also marked as G' such as shown in **Figure 8****.**

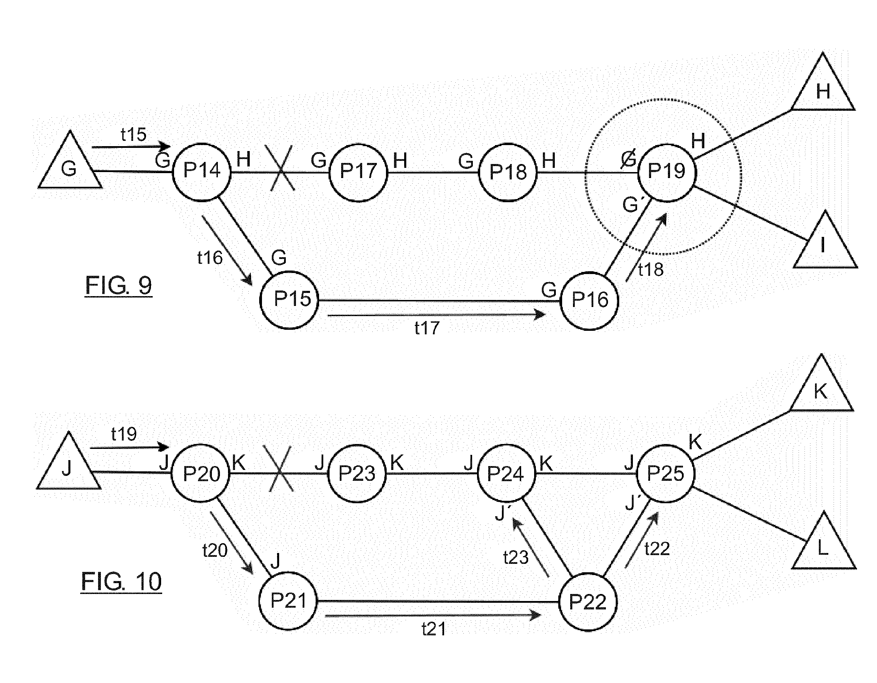

Since the original route is cut between bridges P14 and P17, a replica of the frame does not arrive through G. After the waiting time has elapsed, said route G that is no longer valid will be deleted, and G' will remain, as shown in **Figure 9****,** being subsequently renamed as G.

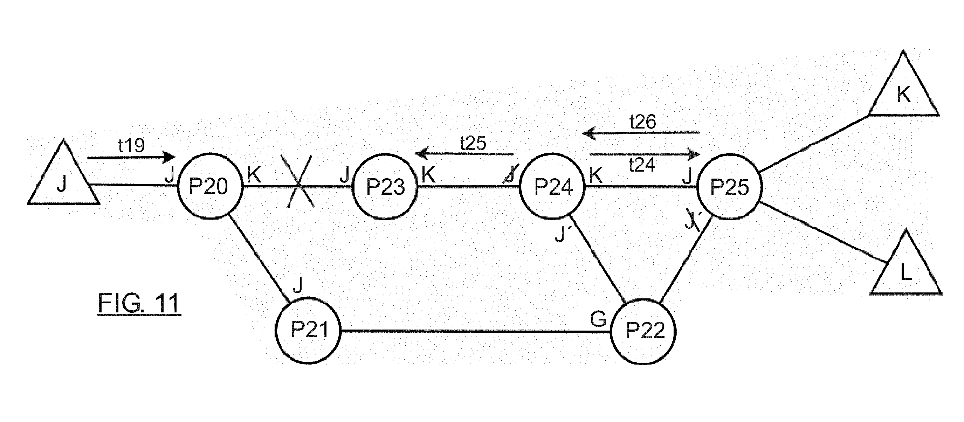

Finally, there can be a topology as the one shown in **figures 10** **and** **11****,** topology similar to the above, but with an available alternative route that will cause that a replica of the source terminal, terminal J, reaches the network bridge. Figures 10 and 11 show a network topology formed by three terminals J, K and L and six network bridges P20, P21, P22, P23, P24 and P25.

In this case, alternative routes will be created at the two network bridges of the triangle, P24 and P25, but only one of them will be maintained since a replica of the Path Request, frame t24, will reach bridge P25, through bridge P24, causing the deletion of the alternative route. The bridge P24 will also receive a replica of the Path Request, frame t26, from P25, but since there is already a J and a J', it will be rejected (when arriving via a third port). Thus, the new route will be established through the bridges P20-P21-P22-P24-P25 for accomplishing the alternative route to destination, as shown in **Figure 11****.**

Once the invention has been clearly described, it is noted that the particular embodiments described above are liable to detail modifications provided that they do not alter the fundamental principle and the essence of the invention.

## Claims

1. Method for repairing data frame routes that comprises:
- receiving, through a network bridge (Pₙ) port wherein said port has an assigned port identity, a frame (tₙ) comprising a source MAC address and a destination MAC address;
- associating, in a recording unit, the source MAC address of the received frame to the port identity of the bridge (Pₙ) that received the frame (tₙ) in the first place, with an expiration indicator of the frame and the arrival time of the frame;
- deleting, in the recording unit, the associations that a port of bridge (Pₙ) may have when a line failure is detected in said port or when the address validity timer expires;
when the received frame (tₙ) does not have its destination MAC address associated to any port in the recording unit of the bridge (Pₙ) and there is a port, in the recording unit of the bridge (Pₙ) receiving the frame, which is associated to the source MAC address of the received frame, the method further comprises:
- routing without modification, the frames (tₙ) whose source MAC address is associated with the port through which they are received, towards the port associated with said source MAC address;
- rejecting the subsequent unicast frames (tₙ) received whose destination MAC address is listed in log of addresses being repaired.
- setting a guard time that blocks the modification of the source MAC address-input port association and the creation of new associations of said MAC address to other ports of the same bridge,
**characterized in that** if the guard time has elapsed without having received a repairing frame through the port associated with the source MAC address and the route repairing frame arrives through a port different to the one associated with the source MAC address of the frame (tₙ), the port through which the frame (tₙ) has been received is associated to the source MAC address being repaired.

2. Method for repairing data frame routes, according to claim 1, wherein the route repairing frames (tₙ) are selected from:
- ARP Request and ARP Reply standard frames;
- special repair packets: Path Fail, Path Request and Path Reply;
- combinations of the above.

3. Method for repairing data frame routes, according to any of the previous claims, **wherein** the log of addresses being repaired comprises the destination MAC addresses under repair and a repair timer longer than the time required for the repairing frames (tₙ) to travel through the network.

4. Method for repairing data frame routes, according to any of the previous claims, **wherein** when a network bridge (Pₙ) receives a Path Fail or Path Request repairing frame comprising a destination MAC address, which is validly associated to one of its ports in its recording unit:
- sending, backwards through the port where it was received, a Path Reply unicast frame towards the source MAC the destination MAC of the received frame and towards the destination MAC, the source MAC of the received frame;
- associating, each bridge that receives the Path Reply frame, the destination MAC address to the port through which the frame is received;
- sending, each bridge receiving the Path Reply frame, the Path Reply frame received through the port associated with the MAC address of the Path Reply frame received;
- registering, each bridge receiving the Path Reply frame, the source MAC address received in a table of recently repaired addresses and activates a guard timer;
- associating, the bridge that has associated in its MACs table of directly connected terminals, the destination MAC of the Path Reply frame, the source MAC of the frame received to the port of the bridge through which the frame was received;
- rejecting, the bridge whose MAC coincides with the destination MAC of the Path Reply frame, the subsequent Path-Reply frames whose MAC addresses coincide with their MAC that are received afterwards during the validity of the guard timer.

5. Network bridge comprising processing means configured for:
- receiving, through a network bridge port (Pₙ) wherein said port has an assigned port identity, a frame (tₙ) comprising a source MAC address and a destination MAC address;
- associating, in a recording unit, the source MAC address of the received frame to the port identity of the bridge (Pₙ) that received the frame (tₙ) in the first place, with an expiration indicator of the frame and the arrival time of the frame;
- deleting, in the recording unit, the associations that a port of bridge (Pₙ) may have when a line failure is detected in said port or when the address validity timer expires;
when the received frame (tₙ) does not have its destination MAC address associated to any port in the recording unit of the bridge (Pₙ) and there is a port, in the recording unit of the bridge (Pₙ) receiving the frame, which is associated to the source MAC address of the received frame, the processing means are configured for:
- routing without modification, the frames (tₙ) whose source MAC address is associated with the port through which they are received, towards the port associated with said source MAC address;
- rejecting the subsequent unicast frames (tₙ) received whose destination MAC address is listed in a log of addresses being repaired;
- setting a guard time that blocks the modification of the source MAC address-input port association and the creation of new associations of said MAC address to other ports of the same bridge,
**characterized in that** if the guard time has elapsed without having received a repairing frame through the port associated with the source MAC address and the route repairing frame arrives through a port different to the one associated with the source MAC address of the frame (tₙ), the processing means are configured for associating the port through which the frame (tₙ) was received to the source MAC address being repaired.

6. Network bridge, according to claim 5, **wherein** the route repairing frames (tₙ) are selected from:
- ARP Request and ARP Reply standard frames;
- special repair packets: Path Fail, Path Request and Path Reply;
- combinations of the above.

7. Network bridge, according to any of claims 5-6, **wherein** the log of addresses being repaired comprises the destination MAC addresses under repair and a repair timer longer than the time required for the repairing frames (tₙ) to travel through the network.

8. Network bridge, according to any of claims 5-7, **wherein** when a network bridge receives a Path Fail or Path Request repairing frame (tₙ) comprising a destination MAC address which is validly associated to one of its ports in its recording unit, the processing means are configured for:
- sending, backwards through the port where it was received, a Path Reply unicast frame towards the source MAC, the destination MAC of the received frame and towards the destination MAC, the source MAC of the received frame;
- associating, at each bridge that receives the Path Reply frame, the destination MAC address to the port through which the frame is received;
- sending, each bridge receiving the Path Reply frame, the Path Reply frame received through the port associated with the MAC address of the Path Reply frame received;
- registering, each bridge receiving the Path Reply frame, the source MAC address received in a table of recently repaired addresses and activates a guard timer;
- associating, the bridge that has associated in its MACs table of directly connected terminals, the destination MAC of the Path Reply frame, the source MAC of the frame received to the port of the bridge through which the frame was received;
- rejecting, the bridge whose MAC coincides with the destination MAC of the Path Reply frame, the subsequent Path-Reply frames whose MAC addresses coincide with their MAC that are received afterwards during the validity of the guard timer.

9. Switched telecommunications network, **wherein** it comprises at least one network bridge defined according to any of claims 5-8.

## Patentansprüche

1. Verfahren zur Reparatur von Datenrahmenrouten, das Folgendes umfasst:
- Empfangen über einen Port einer Netzbrücke (Pₙ), wobei der Port eine zugewiesene Portidentität aufweist, eines Rahmens (tₙ), der eine Quell-MAC-Adresse und eine Ziel-MAC-Adresse umfasst;
- Zuweisen der Quell-MAC-Adresse des empfangenen Rahmens in einer Aufzeichnungseinheit an die Portidentität der Brücke (Pₙ), die den Rahmen (tₙ) zuerst empfangen hat, mit einer Verfallsangabe des Rahmens und der Ankunftszeit des Rahmens;
- Löschen der Zuweisungen, die ein Port einer Brücke (Pₙ) aufweisen kann, in der Aufzeichnungseinheit, wenn eine Leitungsstörung in dem Port detektiert wird oder wenn der Zeitgeber der Adressgültigkeit abläuft;
wenn die Ziel-MAC-Adresse des empfangenen Rahmens (tₙ) keinem Port in der Aufzeichnungseinheit der Brücke (Pₙ) zugewiesen ist und ein Port in der Aufzeichnungseinheit der Brücke (Pₙ), die den Rahmen empfängt, existiert, der der Quell-MAC-Adresse des empfangenen Rahmens zugewiesen ist, umfasst das Verfahren überdies:
- Routing ohne Modifizierung der Rahmen (tₙ), deren Quell-MAC-Adresse dem Port zugewiesen ist, durch den sie empfangen werden, in Richtung des Ports, der der Quell-MAC-Adresse zugewiesen ist;
- Abweisen der nachfolgenden empfangenen Unicast-Rahmen (tₙ), deren Ziel-MAC-Adresse im Protokoll der Adressen aufgeführt ist, die repariert werden;
- Einstellen einer Schutzzeit, die die Modifizierung der Zuweisung des Eingangsports der Quell-MAC-Adresse und die Erstellung neuer Zuweisungen der MAC-Adresse an andere Ports der gleichen Brücke sperrt,
**dadurch gekennzeichnet, dass** der Port, durch den der Rahmen (tₙ) empfangen wurde, der Quell-MAC-Adresse zugewiesen wird, die repariert wird, falls die Schutzzeit abgelaufen ist, ohne dass ein Reparaturrahmen über den Port empfangen wurde, der der Quell-MAC-Adresse zugewiesen ist, und falls der Rahmen zur Routenreparatur über einen Port ankommt, der sich von dem unterscheidet, der der Quell-MAC-Adresse des Rahmens (tₙ) zugewiesen ist.

2. Verfahren zur Reparatur von Datenrahmenrouten nach Anspruch 1, **wobei** die Rahmen (tₙ) zur Routenreparatur aus Folgendem ausgewählt sind:
- ARP-Anforderung- und ARP-Antwort-Standardrahmen;
- spezielle Reparaturpakete: Pfadstörung, Pfadanforderung und Pfadantwort;
- Kombinationen der Vorgenannten.

3. Verfahren zur Reparatur von Datenrahmenrouten nach einem der vorhergehenden Ansprüche, **wobei** das Protokoll der Adressen, die repariert werden, die in Reparatur befindlichen Ziel-MAC-Adressen und einen Reparaturzeitgeber umfasst, der länger läuft als die Zeit, die die Reparaturrahmen (tₙ) benötigen, um durch das Netz zu reisen.

4. Verfahren zur Reparatur von Datenrahmenrouten nach einem der vorhergehenden Ansprüche, **wobei** eine Netzwerkbrücke (Pₙ) einen Pfadstörungs- oder Pfadanforderung-Reparaturrahmen empfängt, der eine Ziel-MAC-Adresse umfasst, die bewiesenermaßen einem der Ports in ihrer Aufzeichnungseinheit zugewiesen ist:
- Senden eines Pfadantwort-Unicast-Rahmens zurück durch den Port, durch den er empfangen wurde, in Richtung der Quell-MAC mit der Ziel-MAC des empfangenen Rahmens und in Richtung der Ziel-MAC mit der Quell-MAC des empfangenen Rahmens;
- Zuweisen, durch jede Brücke, die den Pfadantwortrahmen empfängt, der Ziel-MAC-Adresse an den Port, durch den der Rahmen empfangen wird;
- Senden, durch jede Brücke, die den Pfadantwortrahmen empfängt, des Pfadantwortrahmens, der durch den Port empfangen wurde, dem die MAC-Adresse des empfangenen Pfadantwortrahmens zugewiesen ist;
- Registrieren, durch jede Brücke, die den Pfadantwortrahmen empfängt, der empfangenen Quell-MAC-Adresse in einer Tabelle von kürzlich reparierten Adressen und Aktivieren eines Schutzzeitgebers;
- Zuweisen, durch die Brücke, der in deren MAC-Tabelle von direkt verbundenen Anschlüssen die Ziel-MAC des Pfadantwortrahmens zugewiesen ist, der Quell-MAC des empfangenen Rahmens an den Port der Brücke, durch den der Rahmen empfangen wurde;
- Abweisen, durch die Brücke, deren MAC mit der Ziel-MAC des Pfadantwortrahmens übereinstimmt, der nachfolgenden Pfadantwortrahmen, deren MAC-Adressen mit ihrer MAC übereinstimmen, die nachfolgend, während der Gültigkeit des Schutzzeitgebers empfangen werden.

5. Netzbrücke, umfassend Verarbeitungsmittel, die für Folgendes ausgestaltet sind:
- Empfangen, über einen Netzbrückenport (Pₙ), wobei der Port eine zugewiesene Portidentität aufweist, eines Rahmens (tₙ), umfassend eine Quell-MAC-Adresse und eine Ziel-MAC-Adresse;
- Zuweisen, in einer Aufzeichnungseinheit, der Quell-MAC-Adresse des empfangenen Rahmens an die Portidentität der Brücke (Pₙ), die den Rahmen (tₙ) zuerst empfangen hat, mit einer Verfallsangabe des Rahmens und der Ankunftszeit des Rahmens;
- Löschen, in der Aufzeichnungseinheit, der Zuweisungen, die ein Port der Brücke (Pₙ) aufweisen kann, wenn eine Leitungsstörung in dem Port detektiert wird oder wenn der Zeitgeber der Adressgültigkeit abläuft;
wenn die Ziel-MAC-Adresse des empfangenen Rahmens (tₙ) keinem Port in der Aufzeichnungseinheit der Brücke (Pₙ) zugewiesen ist und ein Port in der Aufzeichnungseinheit der Brücke (Pₙ), die den Rahmen empfängt, existiert, der der Quell-MAC-Adresse des empfangenen Rahmens zugewiesen ist, sind die Verarbeitungsmittel für Folgendes ausgestaltet:
- Routing ohne Modifizierung der Rahmen (tₙ), deren Quell-MAC-Adresse dem Port zugewiesen ist, durch den sie empfangen werden, in Richtung des Ports, der der Quell-MAC-Adresse zugewiesen ist;
- Abweisen der nachfolgenden empfangenen Unicast-Rahmen (tₙ), deren Ziel-MAC-Adresse im Protokoll der Adressen aufgeführt ist, die repariert werden;
- Einrichten einer Schutzzeit, die die Modifizierung der Zuweisung des Eingangsports der Quell-MAC-Adresse und die Erstellung neuer Zuweisungen der MAC-Adresse an andere Ports der gleichen Brücke sperrt,
**dadurch gekennzeichnet, dass** die Verarbeitungsmittel ausgestaltet sind, den Port, durch den der Rahmen (tₙ) empfangen wurde, der Quell-MAC-Adresse zuzuweisen, die repariert wird, falls die Schutzzeit abgelaufen ist, ohne dass ein Reparaturrahmen über den Port empfangen wurde, der der Quell-MAC-Adresse zugewiesen ist, und falls der Rahmen zur Routenreparatur über einen Port ankommt, der sich von dem unterscheidet, der der Quell-MAC-Adresse des Rahmens (tₙ) zugewiesen ist.

6. Netzbrücke nach Anspruch 5, **wobei** die Rahmen (tₙ) zur Routenreparatur aus Folgendem ausgewählt sind:
- ARP-Anforderung- und ARP-Antwort-Standardrahmen;
- spezielle Reparaturpakete: Pfadstörung, Pfadanforderung und Pfadantwort;
- Kombinationen der Vorgenannten.

7. Netzbrücke nach einem der Ansprüche 5-6, **wobei** das Protokoll der Adressen, die repariert werden, die in Reparatur befindlichen Ziel-MAC-Adressen und einen Reparaturzeitgeber umfasst, der länger läuft als die Zeit, die die Reparaturrahmen (tₙ) benötigen, um durch das Netz zu reisen.

8. Netzbrücke nach einem der Ansprüche 5-7, **wobei,** wenn eine Netzwerkbrücke einen Pfadstörungs- oder Pfadanforderung-Reparaturrahmen (tₙ) empfängt, der eine Ziel-MAC-Adresse umfasst, die bewiesenermaßen einem der Ports in ihrer Aufzeichnungseinheit zugewiesen ist, die Verarbeitungsmittel für Folgendes ausgestaltet sind:
- Senden eines Pfadantwort-Unicast-Rahmens zurück durch den Port, durch den er empfangen wurde, in Richtung der Quell-MAC mit der Ziel-MAC des empfangenen Rahmens und in Richtung der Ziel-MAC mit der Quell-MAC des empfangenen Rahmens;
- Zuweisen, an jeder Brücke, die den Pfadantwortrahmen empfängt, der Ziel-MAC-Adresse an den Port, durch den der Rahmen empfangen wird;
- Senden, durch jede Brücke, die den Pfadantwortrahmen empfängt, des Pfadantwortrahmens, der durch den Port empfangen wurde, dem die MAC-Adresse des empfangenen Pfadantwortrahmens zugewiesen ist;
- Registrieren, durch jede Brücke, die den Pfadantwortrahmen empfängt, der empfangenen Quell-MAC-Adresse in einer Tabelle von kürzlich reparierten Adressen und Aktivieren eines Schutzzeitgebers;
- Zuweisen, durch die Brücke, der in deren MAC-Tabelle von direkt verbundenen Anschlüssen die Ziel-MAC des Pfadantwortrahmens zugewiesen ist, der Quell-MAC des empfangenen Rahmens an den Port der Brücke, durch den der Rahmen empfangen wurde;
- Abweisen, durch die Brücke, deren MAC mit der Ziel-MAC des Pfadantwortrahmens übereinstimmt, der nachfolgenden Pfadantwortrahmen, deren MAC-Adressen mit ihrer MAC übereinstimmen, die nachfolgend, während der Gültigkeit des Schutzzeitgebers empfangen werden.

9. Vermitteltes Telekommunikationsnetz, **wobei** es mindestens eine Netzbrücke nach einem der Ansprüche 5-8 umfasst.

## Revendications

1. Procédé de réparation de chemins de trames de données qui consiste à :
- recevoir, à travers un port de pont (Pₙ) de réseau dans lequel ledit port possède une identité de port affectée, une trame (tₙ) comprenant une adresse MAC de source et une adresse MAC de destination ;
- associer, dans une unité d'enregistrement, l'adresse MAC de source de la trame reçue à l'identité de port du pont (Pₙ) qui a reçu la trame (tₙ) en premier, à un indicateur d'expiration de la trame et au moment d'arrivée de la trame ;
- effacer, dans l'unité d'enregistrement, les associations qu'un port de pont (Pₙ) peut avoir lorsqu'une défaillance de ligne est détectée dans ledit port ou lorsque le temporisateur de validité d'adresse expire ;
lorsque la trame (tₙ) reçue ne possède pas son adresse MAC de destination associée à un port quelconque dans l'unité d'enregistrement du pont (Pₙ) et qu'il y a un port, dans l'unité d'enregistrement du pont (Pₙ) recevant la trame, qui est associé à l'adresse MAC de source de la trame reçue, le procédé comprend en outre les étapes consistant à :
- acheminer sans modification les trames (tₙ) dont l'adresse MAC de source est associée au port à travers lequel elles sont reçues, vers le port associé à ladite adresse MAC de source ;
- rejeter les trames (tₙ) de monodiffusion ultérieures reçues dont l'adresse MAC de destination est listée dans un journal d'adresses en cours de réparation ;
- définir un temps de garde qui bloque la modification de l'association port d'entrée-adresse MAC de source et la création de nouvelles associations de ladite adresse MAC aux autres ports du même pont,
**caractérisé en ce que** si le temps de garde s'est écoulé sans avoir reçu une trame de réparation à travers le port associé à l'adresse MAC de source, et la trame de réparation de chemins arrive par un port différent de celui associé à l'adresse MAC de source de la trame (tₙ), le port à travers lequel la trame (tₙ) a été reçue est associé à l'adresse MAC de source en cours de réparation.

2. Procédé de réparation de chemins de trames de données, selon la revendication 1, dans lequel les trames (tₙ) de réparation de chemins sont sélectionnées à partir des éléments suivants :
- des trames standards de requête ARP et de réponse ARP ;
- des paquets de réparation spéciaux : échec de route, requête de route et réponse de route ;
- des combinaisons de ce qui précède.

3. Procédé de réparation de chemins de trames de données, selon l'une quelconque des revendications précédentes, dans lequel le journal d'adresses en cours de réparation comprend les adresses MAC de destination en réparation et un temporisateur de réparation plus long que le temps requis pour que les trames (tₙ) de réparation se déplacent à travers le réseau.

4. Procédé de réparation de chemins de trames de données, selon l'une quelconque des revendications précédentes, dans lequel lorsqu'un pont (Pₙ) de réseau reçoit une trame de réparation d'échec de route ou de requête de route comprenant une adresse MAC de destination, qui est associée de manière valide à l'un de ses ports dans son unité d'enregistrement :
- envoyer, en retour à travers le port où elle a été reçue, une trame de monodififusion de réponse de route vers la MAC de source, la MAC de destination de la trame reçue et vers la MAC de destination, la MAC de source de la trame reçue ;
- associer, chaque pont recevant la trame de réponse de route, l'adresse MAC de destination au port à travers lequel la trame est reçue ;
- envoyer, chaque pont recevant la trame de réponse de route, la trame de réponse de route reçue à travers le port associé à l'adresse MAC de la trame de réponse de route reçue ;
- enregistrer, chaque pont recevant la trame de réponse de route, l'adresse MAC de source reçue dans une table d'adresses réparées récemment et activer un temporisateur de garde ;
- associer, le pont qui a associé dans sa table de MAC des terminaux connectés directement, la MAC de destination de la trame de réponse de route, la MAC de source de la trame reçue au port du pont à travers lequel la trame a été reçue ;
- rejeter, le pont dont la MAC coïncide avec la MAC de destination de la trame de réponse de route, les trames de réponse de route ultérieures dont les adresses MAC coïncident avec leurs MAC qui sont reçues par la suite pendant la validité du temporisateur de garde.

5. Pont de réseau comprenant des moyens de traitement configurés pour :
- recevoir, à travers un port de pont (Pₙ) de réseau dans lequel ledit port possède une identité de port affectée, une trame (tₙ) comprenant une adresse MAC de source et une adresse MAC de destination ;
- associer, dans une unité d'enregistrement, l'adresse MAC de source de la trame reçue à l'identité de port du pont (Pₙ) qui a reçu la trame (tₙ) en premier, à un indicateur d'expiration de la trame et au moment d'arrivée de la trame ;
- effacer, dans l'unité d'enregistrement, les associations qu'un port de pont (Pₙ) peut avoir lorsqu'une défaillance de ligne est détectée dans ledit port ou lorsque le temporisateur de validité d'adresse expire ;
lorsque la trame (tₙ) reçue ne possède pas son adresse MAC de destination associée à un port quelconque dans l'unité d'enregistrement du pont (Pₙ) et qu'il y a un port, dans l'unité d'enregistrement du pont (Pₙ) recevant la trame, qui est associé à l'adresse MAC de source de la trame reçue, les moyens de traitement sont configurés pour :
- acheminer sans modification les trames (tₙ) dont l'adresse MAC de source est associée au port à travers lequel elles sont reçues, vers le port associé à ladite adresse MAC de source ;
- rejeter les trames (tₙ) de monodiffusion ultérieures reçues dont l'adresse MAC de destination est listée dans un journal d'adresses en cours de réparation ;
- définir un temps de garde qui bloque la modification de l'association port d'entrée-adresse MAC de source et la création de nouvelles associations de ladite adresse MAC aux autres ports du même pont,
**caractérisé en ce que** si le temps de garde s'est écoulé sans avoir reçu une trame de réparation à travers le port associé à l'adresse MAC de source, et la trame de réparation de chemins arrive par un port différent de celui associé à l'adresse MAC de source de la trame (tₙ), les moyens de traitement sont configurés pour associer le port à travers lequel la trame (tₙ) a été reçue à l'adresse MAC de source en cours de réparation.

6. Pont de réseau, selon la revendication 5, dans lequel les trames (tₙ) de réparation de chemins sont sélectionnées à partir des éléments suivants :
- des trames standards de requête ARP et de réponse ARP ;
- des paquets de réparation spéciaux : échec de route, requête de route et réponse de route ;
- des combinaisons de ce qui précède.

7. Pont de réseau, selon l'une quelconque des revendications 5 à 6, dans lequel le journal d'adresses en cours de réparation comprend les adresses MAC de destination en réparation et un temporisateur de réparation plus long que le temps requis pour que les trames (tₙ) de réparation se déplacent à travers le réseau.

8. Pont de réseau, selon l'une quelconque des revendications 5 à 7, dans lequel lorsqu'un pont de réseau reçoit une trame (tₙ) de réparation d'échec de route ou de requête de route comprenant une adresse MAC de destination qui est associée de manière valide à l'un de ses ports dans son unité d'enregistrement, les moyens de traitement sont configurés pour :
- envoyer, en retour à travers le port où elle a été reçue, une trame de monodiffusion de réponse de route vers la MAC de source, la MAC de destination de la trame reçue et vers la MAC de destination, la MAC de source de la trame reçue ;
- associer, au niveau de chaque pont qui reçoit la trame de réponse de route, l'adresse MAC de destination au port à travers lequel la trame est reçue ;
- envoyer, chaque pont recevant la trame de réponse de route, la trame de réponse de route reçue à travers le port associé à l'adresse MAC de la trame de réponse de route reçue ;
- enregistrer, chaque pont recevant la trame de réponse de route, l'adresse MAC de source reçue dans une table d'adresses réparées récemment et activer un temporisateur de garde ;
- associer, le pont qui a associé dans sa table de MAC des terminaux connectés directement, la MAC de destination de la trame de réponse de route, la MAC de source de la trame reçue au port du pont à travers lequel la trame a été reçue ;
- rejeter, le pont dont la MAC coïncide avec la MAC de destination de la trame de réponse de route, les trames de réponse de route ultérieures dont les adresses MAC coïncident avec leurs MAC qui sont reçues par la suite pendant la validité du temporisateur de garde.

9. Réseau commuté de télécommunications, dans lequel il comprend au moins un pont de réseau défini selon l'une quelconque des revendications 5 à 8.
